(19) Europäisches Patentamt
European Patent Office
Office européen des brevets

(11) EP 1 883 046 B1

(12) **EUROPEAN PATENT SPECIFICATION**

(45) Date of publication and mention of the grant of the patent:
**21.10.2009 Bulletin 2009/43**

(51) Int Cl.:
***G06T 3/40*** *(2006.01)*

(21) Application number: **07104879.7**

(22) Date of filing: **26.03.2007**

(54) **Image interpolation method and apparatus therefor**

Bildinterpolationsverfahren und Vorrichtung dazu

Procédé d'interpolation d'image et son appareil

(84) Designated Contracting States:
**DE FR GB**

(30) Priority: **26.07.2006 KR 20060070454**

(43) Date of publication of application:
**30.01.2008 Bulletin 2008/05**

(73) Proprietor: **Samsung Electronics Co., Ltd.**
**Suwon-si, Gyeonggi-do (KR)**
Designated Contracting States:
**DE FR GB**

(72) Inventors:
- **Min, Kyoung-june**
  **Gyeonggi-do (KR)**
- **Kang, Dong-soo**
  **Gyeonggi-do (KR)**
- **Kim, Jong-myon**
  **Gyeonggi-do (KR)**
- **Ryu, Eun-jin**
  **Gyeonggi-do (KR)**

(74) Representative: **Grünecker, Kinkeldey, Stockmair & Schwanhäusser Anwaltssozietät**
**Leopoldstrasse 4**
**80802 München (DE)**

(56) References cited:
**US-A- 4 334 240**

- **KASSON J M ET AL: "PERFORMING COLOR SPACE CONVERSIONS WITH THREE-DIMENSIONAL LINEAR INTERPOLATION" JOURNAL OF ELECTRONIC IMAGING, SPIE / IS & T, US, vol. 4, no. 3, 1 July 1995 (1995-07-01), pages 226-249, XP000517861 ISSN: 1017-9909**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 883 046 B1

## Description

### BACKGROUND OF THE INVENTION

1. Field of the Invention

The present invention relates to interpolation, and more particularly, to a method of interpolating image information of a point in a three-dimensional space by using image information of nearby vertices.

2. Description of the Related Art

Interpolation is used to estimate a value of a point using some known values at other points.

Interpolation methods may be developed to improve reliability of interpolated values or to increase interpolation speed. There is a trade-off between improvement in the reliability of the interpolated values and the speed of interpolation.

US 4,224,240 relates to an pyramidal colour interpolation scheme, in which the colour space to be interpolated is decomposed into three tetrahedrons.

Accordingly, a new interpolation method capable of securing suitable reliability and suitable interpolation speed is needed.

### SUMMARY OF THE INVENTION

The present invention provides an image interpolation method capable of rapidly obtaining a reliable interpolated value.

The present invention also provides an image interpolation apparatus capable of rapidly obtaining a reliable interpolated value.

The present invention also provides a computer-readable recording medium having embodied thereon a computer program for executing an image interpolation method capable of rapidly obtaining a reliable interpolated value.

According to an aspect of the present invention, there is provided an interpolation method as defined in appended claim 1. the one or more vertices of the found plane and the obtained information about the plane facing the found plane.

According to another aspect of the present invention, there is provided an image interpolation apparatus as defined in appended claim 6.

According to another aspect of the present invention, there is provided a computer-readable recording medium having embodied thereon a computer program for executing an interpolation method as defined in appended claim 12 of interpolating image information of a point in a space constructed by a plurality of planes, the method including: (a) searching for the nearest plane to the point; (b) obtaining information about a plane facing the found plane by using image information of one or more vertices of the plane facing the found plane; and (c) interpolating the image information of the point by using the image information of the one or more vertices of the found plane and the obtained information about the plane facing the found plane.

### BRIEF DESCRIPTION OF THE DRAWINGS

The above and other features and advantages of the present invention will become more apparent by describing in detail exemplary embodiments thereof with reference to the attached drawings in which:

- FIG. 1 is a view illustrating a field of the invention;
- FIG. 2 is a view illustrating a linear interpolation;
- FIG. 3 is a view illustrating a bilinear interpolation;
- FIG. 4 is a view illustrating a trilinear interpolation;
- FIG. 5 is a block diagram of an image interpolation apparatus according to an embodiment of the present invention;
- FIG. 6 is a block diagram of a base-plane searching unit shown in FIG. 5 according to an embodiment of the present invention;
- FIG. 7 is a view illustrating a storage unit shown in FIG. 5;
- FIG. 8 is a view illustrating an interpolation unit shown in FIG. 5; and
- FIG. 9 is a flowchart illustrating an image interpolation method according to an embodiment of the present invention.

### DETAILED DESCRIPTION OF THE INVENTION

The attached drawings for illustrating exemplary embodiments of the present invention are referred to in order to gain a sufficient understanding of the present invention, the merits thereof, and the objectives accomplished by the implementation of the present invention.

Hereinafter, a method and a device for interpolating an image according to an embodiment of the present invention will be described in detail with reference to the attached drawings.

FIG. 1 is a view illustrating a field of the invention.

In order to display an authorized three-dimensional (3D) graphic data on a two-dimensional (2D) screen, the 3D graphic data needs to be rendered, that is, visualized.

Texture mapping is one of the procedures of rendering the 3D graphic data. The texture mapping is used to apply a 2D image for representing a texture (hereinafter, referred to as "texture image") to a 3D model represented by the 3D graphic data.

In order to perform the rendering, a distance (hereinafter, referred to as "viewpoint distance") between the 3D model and a viewpoint has to be defined. The longer the viewpoint distance is, the lower the texture image resolution applied to the 3D model is. On the contrary, the shorter the viewpoint distance is, the higher the texture image resolution applied to the 3D model is.

In order to perform the texture mapping, a plurality of texture images with respect to a plurality of viewpoints may be stored in a rendering device. As shown in FIG. 1, three texture images 110, 120, and 130 with respect to three viewpoints are stored in the rendering device. In this case, the number of texture images is three for convenience of description.

In (a) of FIG. 1, a relationship between the viewpoints and the resolution of the texture images is schematically shown.

The resolution (for example, 512 x 512 pixels) of the texture image 110 shown in (b) of FIG. 1 is twice that (for example, 256 x 256 pixels) of the texture image 120 shown in (c) of FIG. 1. The resolution of the texture image 120 shown in (c) of FIG. 1 is twice that (for example, 128 x 128 pixels) of the texture image 130 shown in (d) of FIG. 1.

It is impossible for the rendering device to store texture images with respect to all possible viewpoints. Therefore, when a texture image 140 that is to be applied to the 3D model is not stored in the rendering device, the texture image 140 that is to be applied to the 3D model has to be interpolated by using the stored texture images.

Various interpolation methods may be used in rendering fields, and furthermore in various image processing fields. The various interpolation methods are also used in the image interpolation method and apparatus therefor according to an embodiment of the present invention.

FIG. 2 is a view illustrating a linear interpolation. The linear interpolation indicates an interpolation that is to be performed in one-dimension (1 D).

As shown in FIG. 2, a value at a third point 214 is interpolated by using a value (a) at a first point 210 (for example, color information) and a value (b) at a second point 212. Specifically, the value at the third point 214 is interpolated by using Equation 1.

[Equation 1]

Interpolated value at the third point 214 = a * (1-p) + b* p,

Where p is positive value satisfying $0 \le p \le 1$.

FIG. 3 is a view illustrating a bilinear interpolation. The bilinear interpolation indicates an interpolation to be performed in two-dimensions (2D).

As shown in FIG. 3, a value at a third point 370 can be interpolated by using a value (for example, color information) at a first vertex 310, a value at a second vertex 320, a value at a third vertex 330, and a value at a fourth vertex 340.

Specifically, the value at the third point 370 can be interpolated by using Equation 2.

[Equation 2]

Interpolated value at a first point 350 = value at the first vertex 310 * (1-c) + value at the second vertex 320 * c

350 * (1-d) + interpolated value at the second point 360 *

$$\text{where, } \begin{pmatrix} c \text{ is positive value satisfying } 0 \le c \le 1 \\ d \text{ is positive value satisfying } 0 \le d \le 1 \end{pmatrix}$$

FIG. 4 is a view illustrating a trilinear interpolation. The trilinear interpolation indicates an interpolation to be performed in three-dimensions (3D).

As shown in FIG. 4, a value at a point I can be interpolated by using a value (for example, color information) at a first vertex P1 and values at second to eighth vertices P2 to P8.

Specifically, the value at the point I can be interpolated by using Equation 3.

[Equation 3]

Interpolated value at a first point C1 = value at the second vertex P2 * (1-e) + value at the third vertex P3 * e

Interpolated value at a second point C2 = value at the first vertex P1 * (1-e) + value at the fourth vertex P4 * e

Interpolated value at a third point C3 = value at the sixth vertex P6 * (1-e) + value at the seventh vertex P7 * e

Interpolated value at a fourth point C4 = value at the fifth vertex P5 * (1-e) + value at the eighth vertex P8 * e

Interpolated value at a fifth point C5 = interpolated value at the first point C1 * f + interpolated value at the second point C2 * (1-f)

Interpolated value at a sixth point C6 = interpolated value at the third point C3 * f + interpolated value at the fourth point C4 * (1-f)

Interpolated value at the point I = interpolated value at the fifth point C5 * g + interpolated value at the sixth point C6 * (1-g)

$$\text{where} \begin{pmatrix} e \text{ is positive value satisfying } 0 \le e \le 1 \\ f \text{ is positive value satisfying } 0 \le f \le 1 \\ g \text{ is positive value satisfting } 0 \le g \le 1 \end{pmatrix}$$

An improved interpolation method (hereinafter, referred to as pyralinear interpolation method) as compared with the interpolation methods illustrated in FIGS. 2 to 4 will be disclosed below.

FIG. 5 is a block diagram of an image interpolation apparatus according to an embodiment of the present invention. The image interpolation apparatus includes a normalization unit 510, a base-plane searching unit 520, a storage unit 530, an operation unit 540, and an interpolation unit 550.

The normalization unit 510 normalizes location information on vertices input through an input terminal IN1. The location information is 3D information and includes x-axis, y-axis, and z-axis information.

Hereinafter, for convenience of description, it is assumed that the vertices input though the input terminal IN1 correspond to vertices of a plurality of cubes, and a cube including the point I, as shown in FIG. 4, of which image information is to be interpolated, is among the plurality of cubes. On the other hand, color information, in which white is represented by 0, and gray is represented by one of 1 to 254 may be an example of the image information described in the present specification.

The base-plane searching unit 520 searches for the nearest plane to the point I of which the image information is to be interpolated among six planes S1 to S6 which constitute the cube. Hereinafter, for convenience of description, it is assumed that the nearest plane is the plane S3.

The storage unit 530 stores image information about the vertices input through the input terminal IN1.

According to a first embodiment of the present invention, the operation unit 540 reads image information of one or more vertices P2, P3, P6, and P7 of the plane S6 facing the plane S3 found by the base-plane searching unit 520 stored in the storage unit 530.

In addition, the operation unit 540 computes information on a facing plane by using the read image information (the read image information of the vertices P2, P3, P6, and P7). The information on the facing plane indicates any image information that can be computed by using the image information of the vertices of the plane facing the plane found by the base-plane searching unit 520. For example, the operation unit 540 averages the read image information (the read image information of the vertices P2, P3, P6, and P7), thereby computing the information about the facing plane.

On the other hand, according to a second embodiment of the present invention, the operation unit 540 reads the image information of the one or more vertices P1, P4, P5, and P8 of the plane S3 found by the base-plane searching unit 520 stored in the storage unit 530.

In addition, the operation unit 540 can estimate the image information of the one or more vertices P2, P3, P6, and P7 of the plane S6 facing the plane found by the base-plane searching unit 520 by using the read image information (the read image information of the vertices P2, P3, P6, and P7). For example, the operation unit 540 can estimate that the image information of the one or more vertices P2, P3, P6, and P7 of the facing plane S6 is an average of the read image information (the read image information of the vertices P1, P4, P5, and P8). Furthermore, the operation unit 540 can compute the information about the facing plane by using the estimated image information (the estimated image information of the vertices P2, P3, P6, and P7). For example, the operation unit 540 can compute the information about the facing plane by averaging the estimated image information (the estimated image information of the vertices P2, P3, P6, and P7). However, as exemplified above, when the operation unit 540 estimates that the pieces of the image information of the one or more vertices P2, P3, P6, and P7 of the facing plane S6 are the same, the operation unit 540 may determine that one piece of the image information among the pieces of the estimated image information (the pieces of the estimated image information of the one or more vertices P2, P3, P6, and P7) is the information on the facing plane.

According to the first embodiment of the present invention, the interpolation unit 550 reads the image information of one or more vertices P1, P4, P5, and P8 of the plane S3 found by the base-plane searching unit 520 stored in the storage unit 530. On the other hand, according to the second embodiment of the present invention, the interpolation unit 550 receives the read image information (the read image information of the vertices P1, P4, P5, and P8) from the operation unit 540.

The interpolation unit 550 interpolates the image information of the point I by using the read image information (the read image information of the vertices P1, P4, P5, and P8) and the information on the facing plane computed by the operation unit 540.

On the other hand, according to the first embodiment, the image information that is to be read from the storage unit 530 is the image information of the vertices P1, P4, P5, and P8 of the plane S3 and the image information of the vertices P2, P3, P6, and P7 of the plane S6. On the contrary, according to the second embodiment, the image information of the vertices P2, P3, P6, and P7 of the plane S6 is not read from the storage unit 530. Therefore, in the second embodiment, the frequency of communication with the storage unit 530 is remarkably reduced.

FIG. 6 is a block diagram of the base-plane searching unit 520 shown in FIG. 5 according to an embodiment (520A) of the present invention. The searching unit 520 includes a first comparator 610, a subtracter 620, a mirroring information generator 630, a second comparator 640, a mirroring checking unit 650, and a base-plane determination unit 660.

The first comparator 610 compares each component of the coordinates (e, g, f) of the point I of which the image information is to be interpolated using 0.5. Since location information of all the vertices are normalized by the normalization unit 510, each component of the coordinates (e, g, f) of the point I ranges from 0 to 1.

As described in FIG. 4, e indicates a distance between the point I and the plane S1, g indicates a distance between the point I and the plane S2, and f indicates a distance between the point I and the plane S3.

That is, when the coordinate (e) of the x-axis component of the point I is equal to or less than 0.5, the point I is closer to the plane S1 than to the plane S4. When the coordinate (g) of the y-axis component of the point I is equal to or less than 0.5, the point I is closer to the plane S2 than to the plane S5. When the coordinate (f) of the z-axis component of the point I is equal to or less than 0.5, the point I is closer to the plane S3 than to the plane S6. Hereinafter, for convenience of description, it is assumed that (e, g, f) = (0.4, 0.7, 0.2).

Specifically, when it is determined by the first comparator 610 that the coordinate (e) of the x-axis component of the point I is equal to or less than 0.5, the first comparator 610 determines that the point I is closer to the plane S1 than to the plane S4 and outputs the coordinate (0.4) to the second comparator 640.

Similarly, when it is determined by the first comparator 610 that the coordinate (g) of the y-axis component of the point I is equal to or less than 0.5, the first comparator 610 determines that the point I is closer to the plane S5 than to the plane S2 and outputs the coordinate (0.7) to the subtracter 620.

Similarly, when it is determined by the first comparator 610 that the coordinate (f) of the z-axis component of the point I is equal to or less than 0.5, the first comparator 610 determines that the point I is closer to the plane S3 than to the plane S6 and outputs the coordinate (0.2) to the second comparator 640.

Finally, the first comparator 610 reduces candidates of the nearest plane to the point I from six planes S1, S2, S3, S4, S5, and S6 to three planes S1, S5, and S3.

On the other hand, the subtracter 620, the mirroring information generator 630, the second comparator 640, the mirroring checking unit 650, and the base-plane searching unit 660 search for the nearest plane to the point I among the three planes S1, S5, and S3.

The subtracter 620 can operate only when it is determined by the first comparator 610 that the coordinates are greater than 0.5. Specifically, when it is determined by the first comparator 610 that the coordinates is greater than 0.5 (0.7 > 0.5), the subtracter 620 changes the coordinate (0.7) of the point I to the result (0.3)' of subtracting the coordinate (0.7) of the point I from 1 and outputs the changed coordinate (0.3) to the second comparator 640.

The mirroring information generator 630 can generate mirroring information according to instructions of the first comparator 610 and the subtracter 620. In this case, the mirroring information can be constructed by using three bits. For example, when it is determined by the first comparator 610 that the coordinates are equal to or less than 0.5, the mirroring information generator 630 generates a bit that represents 0 according to the instruction of the first comparator 610. In addition, when it is determined by the first comparator 610 that the coordinates are greater than 0.5, and the subtracter 620 operates, the mirroring generator 630 generates a bit that represents 1. Under the aforementioned assumption, the mirroring information generator 630 generates the mirroring information that represents 010.

The second comparator 640 compares coordinates (0.4, 0.2)' received from the first comparator 610 with the coordinate (0.3)' received from the subtracter 620. Accordingly, the second comparator 640 searches for the least value among the coordinates (0.4, 0.2)' received from the first comparator 610 and the coordinate (0.3)' received from the subtracter 620 and outputs the found coordinate (0.2) to the mirroring checking unit 650.

The mirroring checking unit 650 checks whether the mirroring is to be performed or not by analyzing the mirroring information (last '0' of 010) related to the axis component (z-axis component) of the coordinate received from the second comparator 640. When the mirroring bit is 0, mirroring need not be performed. On the contrary, when the mirroring bit is 1, mirroring needs to be performed.

When it is checked that the mirroring need not be performed, the base-plane determination unit 660 determines that the plane S3 to be the nearest plane to the point I according to the coordinate (0.2) received from the second comparator 640 is the plane that is to be searched for by the base-plane searching unit 510.

When it is checked that the mirroring needs to be performed, the base-plane determination unit 660 determines that the plane S6 (that is, the mirrored plane) facing the plane S3 to be the nearest plane to the point I according to the coordinate (0.2) received from the second comparator 640 is the plane that is to be searched for by the base-plane searching unit 510, which differs from the aforementioned assumption,.

FIG. 7 is a view illustrating a storage unit 530 shown in FIG. 5. FIG. 8 is a view illustrating an interpolation unit 550 shown in FIG. 5. Specifically, FIG. 8 is a view illustrating FIG. 4 so that the plane S3 found by the base-plane searching unit 520 may be the base-plane of the lattice.

The storage unit 530 stores the image information and an operation rule of the interpolation unit 550 in a form of a look-up table (LUT) as shown in FIG. 7.

When the plane found by the base-plane searching unit 520 is the plane S3, the operation rule stored in the storage unit 530 is that interpolations between the vertices P1 and P4, or P5 and P8 located in parallel with the x-axis are performed, and an interpolation between the points C2 and C4 located in parallel with the y-axis is performed, and an interpolation between the points C8 and A located in parallel with the z-axis is performed. It needs to be determined which interpolation is performed first of the interpolation between the vertices P1 and P4 and the interpolation between the vertices P5 and P8. According to the operation rule stored in the storage unit 530, the interpolation between the vertices P1 and P4 is performed first. In addition, according to the operation rule stored in the storage unit 530, the information on the facing plane is an average of the pieces of the image information of the vertices P2, P3, P6, and P7.

The interpolation unit 550 reads the stored operation rule and performs interpolation according to the read operation rule.

As described above, the interpolation unit 550 interpolates the image information of the point I by using the image information of the one or more vertices P1, P4, P5, and P8 of the plane S3 found by the base-plane searching unit 520 and the information on the facing plane computed by the operation unit 540.

Finally, the interpolation unit 550 interpolates the image information of the point I by using Equation 4.

[Equation 4]

Interpolated image information of the second point C2 = image information of the first vertex P1 * (1-e) + image information of the fourth vertex P4 * e

Interpolated image information of the fourth point C4 = image information of the fifth vertex P5 * (1-e) + image information of the eighth vertex P8 * e

Interpolated image information of the eighth point C8 = interpolated image information of the second vertex P2 * g + interpolated image information of the fourth point C4 * (1-g)

Interpolated image information of the point I = interpolated image information of the eighth point C8 * (1-f) + information on the facing plane * f

Referring to Equation 4, the information on the facing plane is treated as image information of an intersection point A between an extension line connecting the eighth point C8 and the point I and the plane S6.

FIG. 9 is a flowchart illustrating an image interpolation method according to an embodiment of the present invention.

The base-plane searching unit 520 searches for the nearest plane to the point at which the image information is to be interpolated among the planes surrounding the point (operation 910).

After operation 910, the operation unit 540 obtains information about the facing plane by using the image information of the one or more vertices of the plane facing the plane found in operation 910 (operation 920).

After operation 920, the interpolation unit 550 interpolates the image information of the point by using the image information of the one or more vertices of the plane found in operation 910 and the information about the facing plane obtained in operation 920 (operation 930).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

As described above, the image interpolation method and the apparatus therefor according to embodiments of the present invention have an advantage of rapidly obtaining a reliable interpolated value. Specifically, in the image interpolation method according to an embodiment of the present invention, that is, in the pyralinear interpolation method, interpolation can be performed faster than in the trilinear interpolation method. More specifically, while the linear interpolation is performed eight times in order to perform the trilinear interpolation once, the linear interpolation is performed four times in order to perform the pyralinear interpolation once. In addition, in the pyralinear interpolation according to the first embodiment of the present invention, since the read image information of the eight vertices is needed to perform the pyralinear interpolation once, and similarly the read image information of the eight vertices is needed to perform the trilinear interpolation once, though in the pyralinear interpolation, remarkably small numbers of linear interpolations are performed, the value interpolated by the pyralinear interpolation can approach the value interpolated by the trilinear interpolation to some extent. On the other hand, since the base-plane searching unit 520, which is one of the essential components of the image interpolation apparatus according to embodiments of the present invention, can be embodied by a low priced operation unit such as a comparator instead of a high priced operation unit such as a multiplier, and thus the image interpolation apparatus according to embodiments of the present invention can be embodied at low cost.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An interpolation method for interpolating image information of a point (I) in a space formed by a plurality of planes the planes constituting a cube and each plane being perpendicular to an axis direction of a 3D space, the method comprising:

   searching for a nearest plane (S3) to the point (I) among the planes perpendicular to each axis direction;
   obtaining information about a plane (S6) facing the nearest plane (S3) using image information of one or more vertices of the plane (S6) facing the nearest plane (S3); and
   interpolating the image information of the point (I) using the image information of the one or more vertices (p1, p4, p5, p8) of the nearest plane (S3) and the obtained information about the plane (S6) facing the nearest plane (S3).

2. The method of claim 1,
   wherein in the obtaining, the image information of the one or more vertices of the facing plane among previously stored pieces of image information is read, and the information about the facing plane is obtained by using the read image information, and
   wherein in the interpolating, the image information of the one or more vertices of the nearest plane among the stored pieces of the image information is read, and the image information of the point is interpolated using the read image information of the one or more vertices of the nearest plane and the obtained information about the facing plane.

3. The method of claim 1,
   wherein in the obtaining, the image information of the one or more vertices of the nearest plane among previously stored pieces of image information is read, the image information of the one or more vertices of the facing plane is estimated, and the information about the facing plane is obtained by using the estimated image information, and
   wherein in the interpolating, the image information of the point is interpolated using the read image information and the obtained information about the facing plane.

4. The method of claim 1, wherein in the obtaining, the information about the facing plane is obtained by averaging pieces of the image information of the vertices of the facing plane.

5. The method of claim 1, wherein the space is formed by a plurality of lattices each comprising a plurality of planes, and the information about the facing plane (S6) is estimated image information of a point (A) on the facing plane (S6).

6. An interpolation system for interpolating image information of a point (I) in a space formed by a plurality of planes the planes constituting a cube and each plane being perpendicular to an axis direction of a 3D space, the system comprising:

   a base-plane searching unit (520) to search for a nearest plane (S3) to the point (I) among the planes perpendicular to each axis direction;
   an operation unit (540) to compute information about a plane (S6) facing the nearest plane (S3) using image information of one or more vertices of the nearest plane; and
   an interpolation unit (550) to interpolate the image information of the point using the image information of the one or more vertices of the nearest plane and the computed information about the plane facing the nearest plane.

7. The system of claim 6, further comprising a storage unit (530) to store the image information of the vertices of the plurality of planes,
   wherein the operation unit (540) reads the image information of the one or more vertices of the facing plane among pieces of the stored image information, and the information about the facing plane is computed by using the read image information, and
   wherein the interpolation unit (550) reads the image information of the one or more vertices of the nearest plane among the pieces of the stored image information, and the image information of the point is interpolated by using the read image information of the one or more vertices of the nearest plane and the computed information about the facing plane.

8. The system of claim 6, further comprising a storage unit (530) storing the image information of the vertices of the plurality of planes,
   wherein the operation unit (540) reads the image information of the one or more vertices of the nearest plane among pieces of the stored image information, and the image information of the one or more vertices of the facing plane is estimated by using the read image information, and the information about the facing plane is computed by using the estimated image information, and
wherein the interpolation unit (550) interpolates the image information of the point using the read image information and the computed information about the facing plane.

**9.** The system of claim 6, wherein the operation unit (540) computes the information on the facing plane by averaging pieces of the image information of the vertices of the facing plane.

**10.** The system of claim 6, wherein the base-plane searching unit (520) searches the nearest plane to the point among planes perpendicular to each axis direction.

**11.** The system of claim 6, wherein the space is formed by a plurality of lattices each comprising a plurality of planes, and the information on the facing plane (S6) is estimated image information of a point (A) on the facing plane.

**12.** A computer-readable recording medium having embodied thereon a computer program for executing an image interpolation method according to one of claims 1 to 5.

## Patentansprüche

**1.** Interpolationsverfahren zum Interpolieren von Bildinformationen eines Punktes (I) in einem Raum, der durch eine Vielzahl von Ebenen gebildet wird, wobei die Ebenen einen Würfel bilden und jede Ebene senkrecht zu einer Achsenrichtung eines dreidimensionalen Raums ist, und wobei das Verfahren umfasst:

Suchen nach einer dem Punkt (I) nächstgelegenen Ebene (S3) unter den Ebenen senkrecht zu jeder Achsenrichtung;
Ermitteln von Informationen über eine Ebene (S6), die der nächstgelegenen Ebene (S3) zugewandt ist, unter Verwendung von Bildinformationen eines oder mehrerer Scheitelpunkte der Ebene (S6), die der nächstgelegenen Ebene (S3) zugewandt ist; und
Interpolieren der Bildinformationen des Punktes (I) unter Verwendung der Bildinformationen des einen oder der mehreren Scheitelpunkt/e (p1, p4, p5, p8) der nächstgelegenen Ebene (S3) und der über die der nächstgelegenen Ebene (S3) zugewandten Ebene (S6) ermittelten Informationen.

**2.** Verfahren nach Anspruch 1,
wobei beim Ermitteln die Bildinformationen des einen oder der mehreren Scheitelpunkt/e der zugewandten Ebene unter zuvor gespeicherten Elementen von Bildinformationen gelesen werden und die Informationen über die zugewandte Ebene unter Verwendung der gelesenen Bildinformationen ermittelt werden, und
wobei beim Interpolieren die Bildinformationen des einen oder der mehreren Scheitelpunkt/e der nächstgelegenen Ebene unter den gespeicherten Elementen der Bildinformationen gelesen werden und die Bildinformationen des Punktes unter Verwendung der gelesenen Bildinformationen des einen oder der mehreren Scheitelpunkt/e der nächstgelegenen Ebene und der über die zugewandten Ebene ermittelten Informationen interpoliert werden.

**3.** Verfahren nach Anspruch 1,
wobei bei dem Ermitteln die Bildinformationen des einen oder der mehreren Scheitelpunkt/e der nächstgelegenen Ebene unter zuvor gespeicherten Elementen von Bildinformationen gelesen werden, die Bildinformationen des einen oder der mehreren Scheitelpunkt/e der zugewandten Ebene geschätzt werden und die Informationen über die zugewandte Ebene unter Verwendung der geschätzten Bildinformationen ermittelt werden, und
wobei beim Interpolieren die Bildinformationen des Punktes unter Verwendung der gelesenen Bildinformationen und der über die zugewandten Ebene ermittelten Informationen interpoliert werden.

**4.** Verfahren nach Anspruch 1, wobei beim Ermitteln die Informationen über die zugewandte Ebene ermittelt werden, indem Elemente der Bildinformationen der Scheitelpunkte der zugewandten Ebene gemittelt werden.

**5.** Verfahren nach Anspruch 1, wobei der Raum durch eine Vielzahl von Gittern gebildet wird, die jeweils eine Vielzahl von Ebenen umfassen, und die Informationen über die zugewandte Ebene (S6) geschätzte Bildinformationen eines Punktes (A) auf der zugewandten Ebene (S6) sind.

6. Interpolationssystem zum Interpolieren von Bildinformationen eines Punktes (I) in einem Raum, der durch eine Vielzahl von Ebenen gebildet wird, wobei die Ebenen einen Würfel bilden und jede Ebene senkrecht zu einer Achsenrichtung eines dreidimensionalen Raums ist, und wobei das System umfasst:

    eine Basisebenen-Sucheinheit (520) zum Suchen nach einer dem Punkt (I) nächstgelegenen Ebene (S3) unter den Ebenen senkrecht zu jeder Achsenrichtung;
    eine Operationseinheit (540) zum Berechnen von Informationen über eine Ebene (S6), die der nächstgelegenen Ebene (S3) zugewandt ist, unter Verwendung von Bildinformationen eines oder mehrerer Scheitelpunkt/e der nächstgelegenen Ebene; und
    eine Interpolationseinheit (550) zum Interpolieren der Bildinformationen des Punktes unter Verwendung der Bildinformationen des einen oder der mehreren Scheitelpunkt/e der nächstgelegenen Ebene und der über die der nächstgelegenen Ebene zugewandten Ebene berechneten Informationen.

7. System nach Anspruch 6, das des Weiteren eine Speichereinheit (530) zum Speichern der Bildinformationen der Scheitelpunkte der Vielzahl von Ebenen umfasst,
wobei die Operationseinheit (540) die Bildinformationen des einen oder der mehreren Scheitelpunkt/e der zugewandten Ebene unter Elementen der gespeicherten Bildinformationen liest und die Informationen über die zugewandte Ebene unter Verwendung der gelesenen Bildinformationen berechnet werden, und
wobei die Interpolationseinheit (550) die Bildinformationen des einen oder der mehreren Scheitelpunkt/e der nächstgelegenen Ebene unter den Elementen der gespeicherten Bildinformationen liest und die Bildinformationen des Punktes unter Verwendung der gelesenen Bildinformationen des einen oder der mehreren Scheitpunkt/e der nächstgelegenen Ebene und der über die zugewandten Ebene berechneten Informationen interpoliert werden.

8. System nach Anspruch 6, das des Weiteren eine Speichereinheit (530) umfasst, die die Bildinformationen der Scheitelpunkte der Vielzahl von Ebenen speichert,
wobei die Operationseinheit (540) die Bildinformationen des einen oder der mehreren Scheitelpunkt/e der nächstgelegenen Ebene unter Elementen der gespeicherten Bildinformationen liest und die Bildinformationen des einen oder der mehreren Scheitelpunkt/e der zugewandten Ebene unter Verwendung der gelesenen Bildinformationen geschätzt werden und die Informationen über die zugewandte Ebene unter Verwendung der geschätzten Bildinformationen berechnet werden, und
wobei die Interpolationseinheit (550) die Bildinformationen des Punktes unter Verwendung der gelesenen Bildinformationen und der berechneten Informationen über die zugewandte Ebene interpoliert.

9. System nach Anspruch 6, wobei die Operationseinheit (540) die Informationen über die zugewandte Ebene durch Mitteln von Elementen der Bildinformationen der Scheitelpunkte der zugewandten Ebene berechnet.

10. System nach Anspruch 6, wobei die Basisebenen-Sucheinheit (520) nach der dem Punkt nächstgelegene Ebene unter Ebenen senkrecht zu jeder Achsenrichtung sucht.

11. System nach Anspruch 6, wobei der Raum durch eine Vielzahl von Gittern gebildet wird, die jeweils eine Vielzahl von Ebenen umfassen, und die Informationen über die zugewandte Ebene (S6) geschätzte Bildinformationen eines Punktes (A) auf der zugewandten Ebene sind.

12. Computerlesbares Speichermedium, auf dem ein Computerprogramm zum Ausführen eines Bildinterpolationsverfahrens nach einem der Ansprüche 1 bis 5 realisiert ist.

**Revendications**

1. Un procédé d'interpolation pour l'interpolation d'information d'image d'un point (I) dans un espace formé d'une pluralité de plans, les plans constituant un cube et chaque plan étant perpendiculaire à une direction d'axe d'un espace 3D, le procédé comprenant :

    la recherche d'un plan le plus proche (S3) du point (I) parmi les plans perpendiculaires à chaque direction d'axe ;
    l'obtention de l'information à propos d'un plan (S6) étant face au plan le plus proche (S3) utilisant d'information d'image d'un ou plusieurs vertices du plan (S6) faisant face au plan le plus proche (S3) ; et
    interpolation de l'information d'image du point (I) utilisant l'information d'image de l'un ou des plusieurs vertices (p1, p4, p5, p8) du plan le plus proche (S3) et l'information obtenue concernant le plan (S6) faisant face au plan le plus proche (S3).

2. Le procédé selon la revendication 1,
où, dans l'obtention, l'information d'image de l'un ou des plusieurs vertices du plan situé en face parmi des bouts d'information d'image enregistrés précédemment est lue, et l'information sur le plan situé en face est obtenue en utilisant l'information d'image lue, et
où, dans l'interpolation, l'information d'image de l'un ou des plusieurs vertices du plan le plus proche parmi les bouts de l'information d'image enregistrés au préalable est lue, et l'information d'image du point est interpolée en utilisant l'information d'image lue de l'un ou des plusieurs vertices du plan le plus proche et l'information obtenue concernant le plan situé en face.

3. Le procédé selon la revendication 1,
où, dans l'obtention, l'information d'image de l'un ou des plusieurs vertices du plan le plus proche parmi des bouts d'informations d'image enregistrés au préalable est lue, l'information d'image de l'un ou des plusieurs vertices du plan situé en face est estimée, et l'information concernant le plan situé en face s'obtient en utilisant l'information d'image estimée, et
où, dans l'interpolation, l'information d'image du point est interpolée en utilisant l'information d'image lue et l'information obtenue concernant le plan situé en face.

4. Le procédé selon la revendication 1, où, dans l'obtention, l'information concernant le plan situé en face s'obtient en moyenant des bouts d'information d'image des vertices du plan situé en face.

5. Le procédé selon la revendication 1, où l'espace est formé d'une pluralité de quadrillages comprenant chacun une pluralité de plans, et l'information concernant le plan situé en face (S6) est de l'information d'image estimée d'un point (A) sur le plan situé en face (S6).

6. Un système d'interpolation pour l'information d'image d'interpolation d'un point (I) dans un espace formé d'une pluralité de plans, les plans constituant un cube et chaque plan étant perpendiculaire à une direction d'axe d'un espace 3D, le système comprenant :

   une unité de recherche de plan de base (520) pour rechercher un plan le plus proche (S3) du point (I) parmi les plans perpendiculaires à chaque direction d'axe ;
   une unité de calcul (540) pour calculer de l'information concernant un plan (S6) faisant face au plan le plus proche (S3) utilisant de l'information d'image d'un ou de plusieurs vertices du plan le plus proche ; et
   une unité d'interpolation (550) pour interpoler l'information d'image du point utilisant l'information d'image de l'un ou des plusieurs vertices du plan le plus proche et l'information calculée concernant le plan situé en face du plan le plus proche.

7. Le système selon la revendication 6, comprenant en outre une unité de mémorisation (530) pour mémoriser l'information d'image des vertices de la pluralité de plans,
où l'unité de calcul (540) lit l'information d'image de l'un ou des plusieurs vertices du plan situé en face parmi des bouts s'information d'image mémorisée, et l'information sur le plan situé en face est calculée en utilisant l'information d'image lue, et
où l'unité d'interpolation (550) lit l'information d'image de l'un ou des plusieurs vertices du plan le plus proche parmi les bouts d'information d'image mémorisée, et l'information d'image du point est interpolée en utilisant l'information d'image lue de l'un ou des plusieurs vertices du plan le plus proche et l'information calculée concernant le plan situé en face.

8. Le système selon la revendication 6, comprenant en outre une unité de mémorisation (530) mémorisant l'information d'image des vertices de la pluralité de plans,
où l'unité de calcul (540) lit l'information d'image de l'un ou des plusieurs vertices du plan le plus proche parmi des boutsd'informations d'image mémorisée, et l'information d'image de l'un ou des plusieurs vertices du plan situé en face est estimée en utilisant l'information d'image lue, et l'information concernant le plan situé en face est calculée en utilisant l'information d'image estimée, et
où l'unité d'interpolation (550) interpole l'information d'image du point utilisant l'information d'image lue et l'information calculée concernant le plan situé en face.

9. Le système selon la revendication 6, où l'unité d'utilisation (540) calcule l'information sur le plan situé en face en faisant la moyenne des bouts de l'information d'image des vertices du plan situé en face.

**10.** Le système selon la revendication 6, où l'unité de recherche du plan base (520) recherche le plan le plus proche du point parmi des plans perpendiculaires à chaque direction d'axe.

**11.** Le système selon la revendication 6, où l'espace est formé d'une pluralité de quadrillages comprenant chacun une pluralité de plans, et l'information concernant un plan situé en face (S6) est de l'information d'image estimée d'un point (A) sur le plan situé en face.

**12.** Un support de mémorisation lisible par l'ordinateur ayant un programme informatique pour l'exécution d'un procédé d'interpolation d'image selon l'une des revendications 1 à 5.

FIG. 1

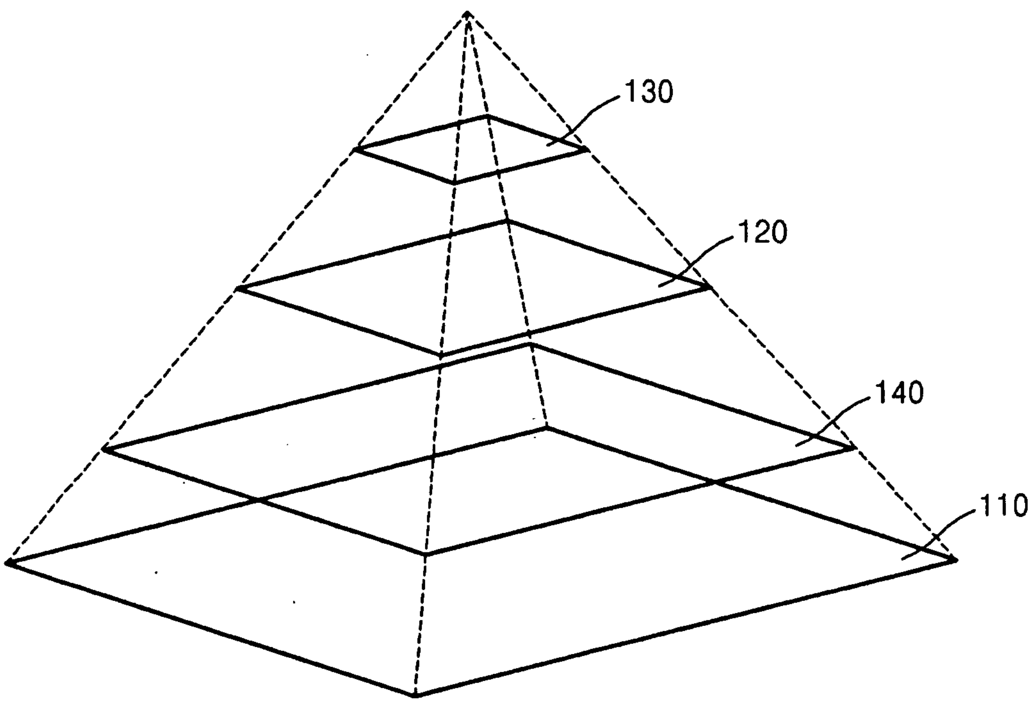


(a)

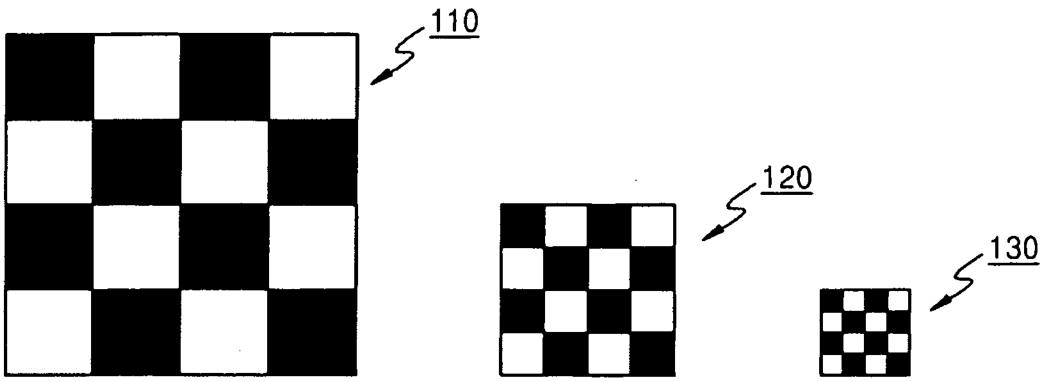


(b) (c) (d)

FIG. 2

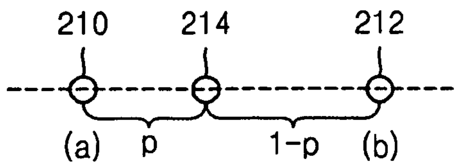


FIG. 3

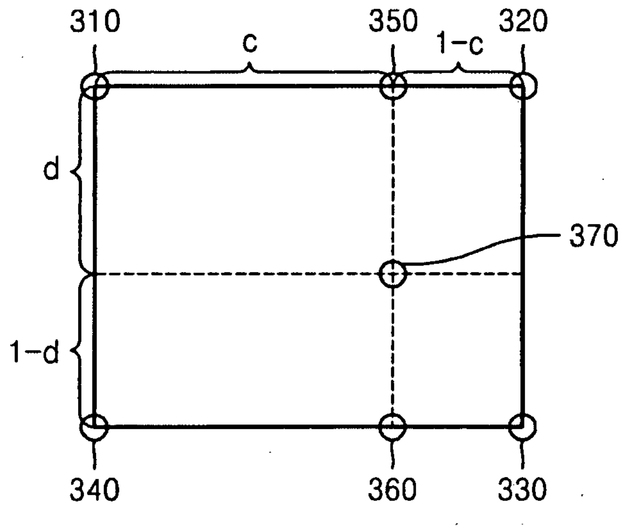

FIG. 4

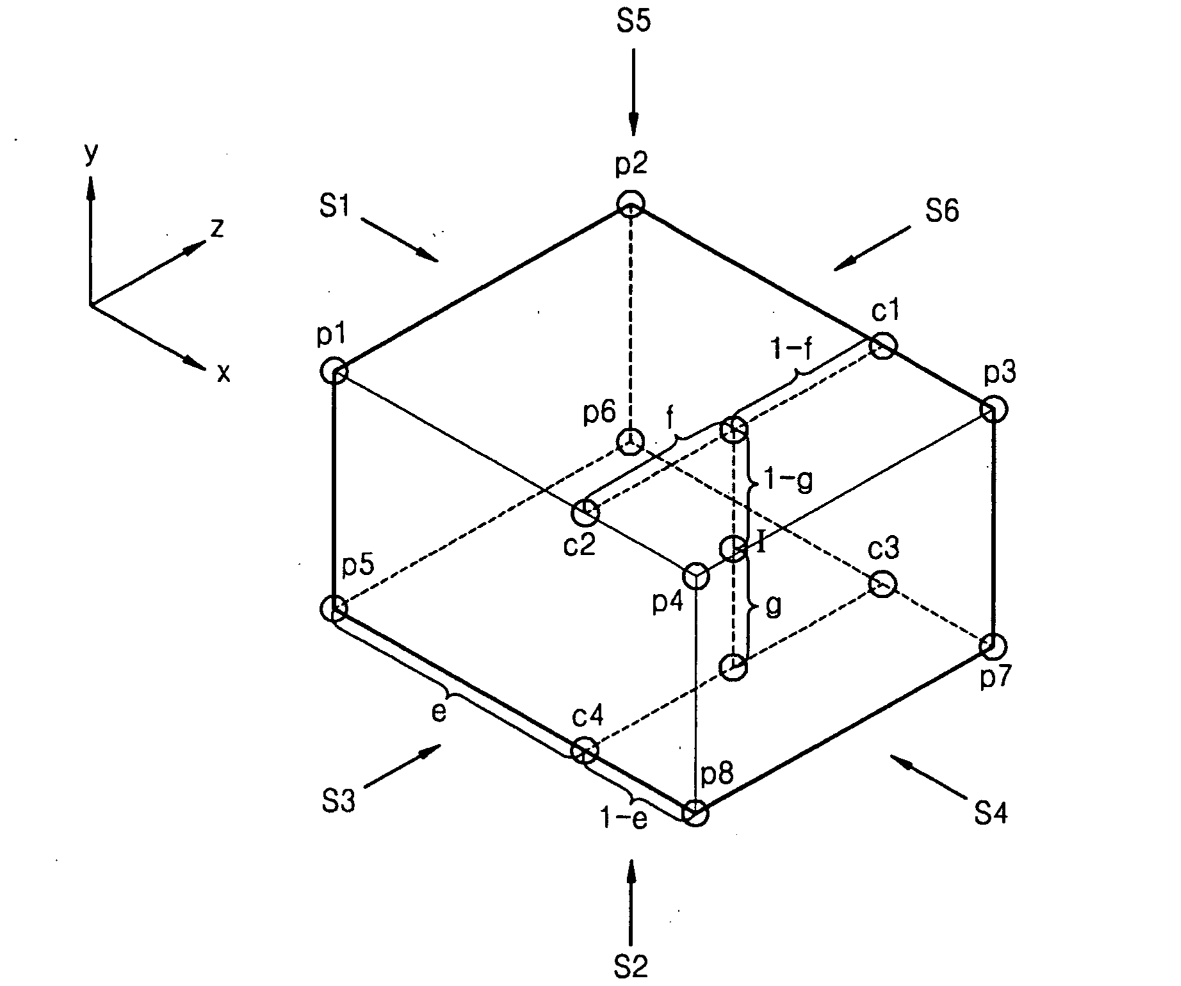
S5
y
z
x
p2
S1
S6
p1
c1
1-f
p3
p6
f
1-g
c2
I
c3
p5
p4
g
p7
e
c4
p8
S3
1-e
S4
S2

FIG. 5

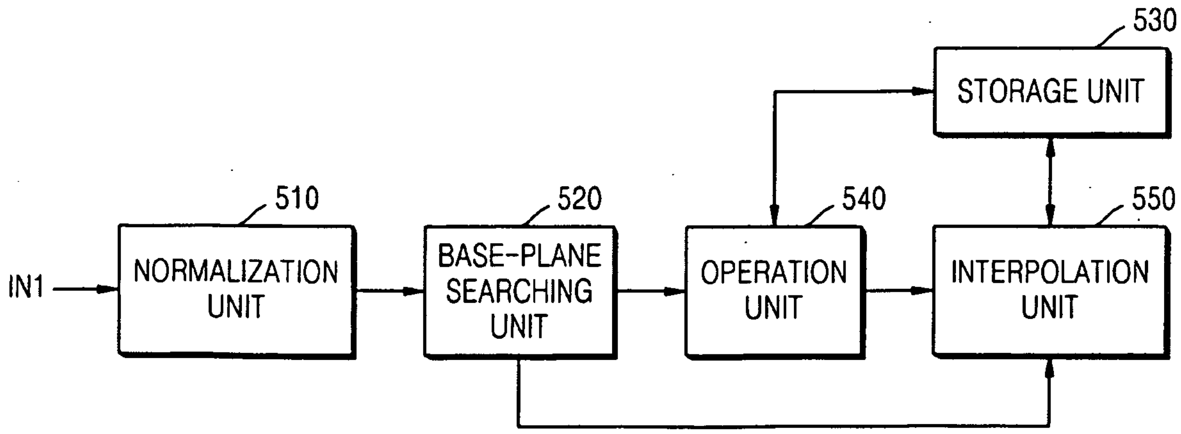
530
STORAGE UNIT
510
520
540
550
IN1
NORMALIZATION UNIT
BASE-PLANE SEARCHING UNIT
OPERATION UNIT
INTERPOLATION UNIT

FIG. 6

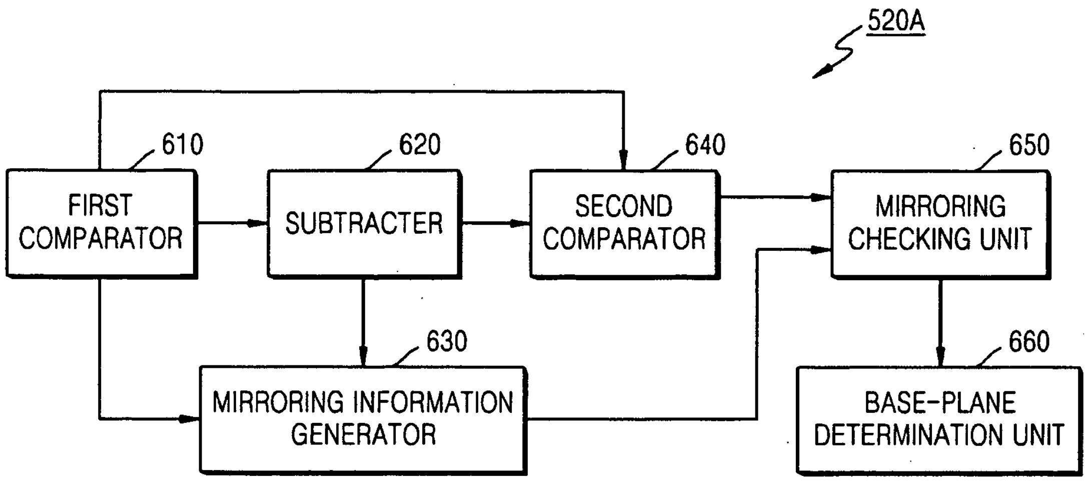


FIG. 7

| BASE-PLANE \ OPERATION | FIRST INTERPOLATION | SECOND INTERPOLATION | AVERAGE VALUE CALCULATION | INTERPOLATION ORDER |
|---|---|---|---|---|
| S1 | P1 P2 | P5 P6 | P3 P4 P2 P8 | x AXIS y AXIS x AXIS |
| S2 | P6 P7 | P5 P8 | P1 P2 P3 P4 | x AXIS z AXIS y AXIS |
| S3 | P1 P4 | P5 P8 | P2 P3 P6 P7 | x AXIS y AXIS z AXIS |
| S4 | P3 P4 | P7 P8 | P1 P2 P5 P6 | z AXIS y AXIS x AXIS |
| S5 | P2 P3 | P1 P4 | P5 P6 P7 P8 | x AXIS z AXIS y AXIS |
| S6 | P2 P3 | P6 P7 | P1 P4 P5 P8 | x AXIS y AXIS z AXIS |

FIG. 8

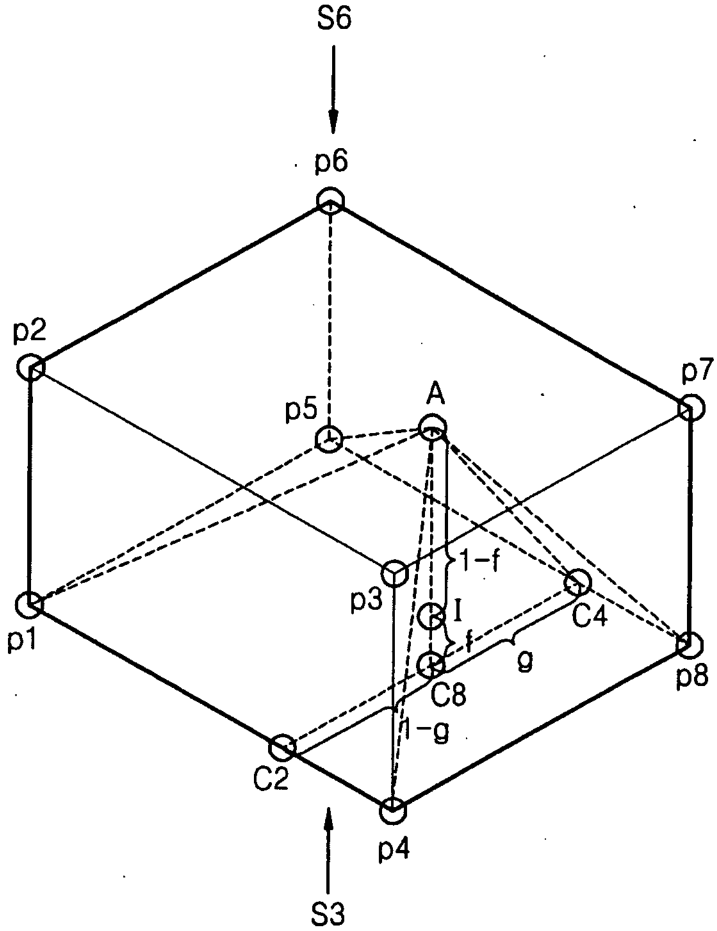

FIG. 9

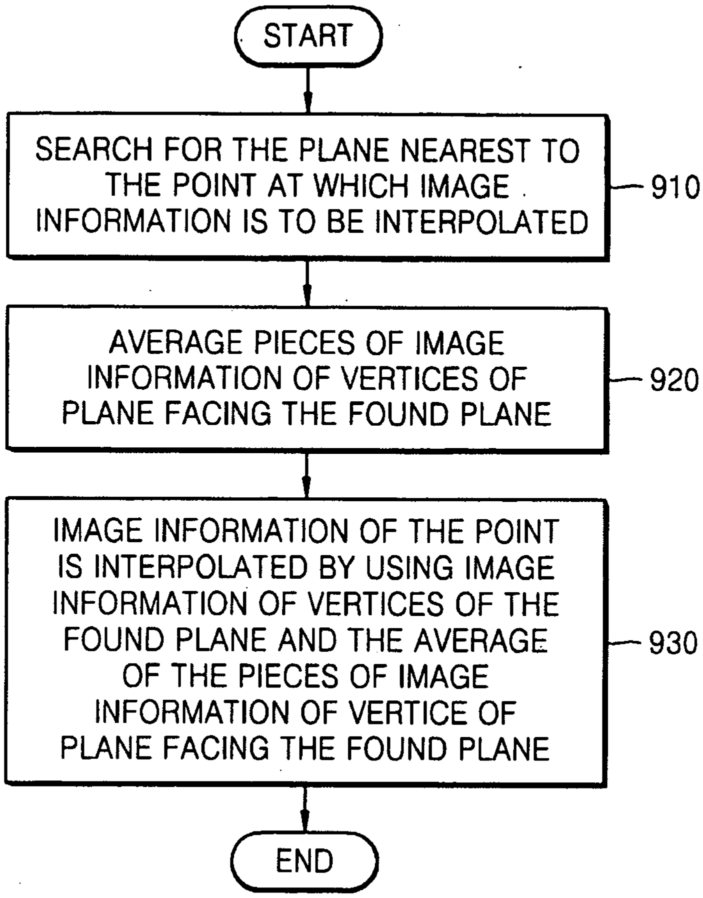
START
SEARCH FOR THE PLANE NEAREST TO THE POINT AT WHICH IMAGE INFORMATION IS TO BE INTERPOLATED
910
AVERAGE PIECES OF IMAGE INFORMATION OF VERTICES OF PLANE FACING THE FOUND PLANE
920
IMAGE INFORMATION OF THE POINT IS INTERPOLATED BY USING IMAGE INFORMATION OF VERTICES OF THE FOUND PLANE AND THE AVERAGE OF THE PIECES OF IMAGE INFORMATION OF VERTICE OF PLANE FACING THE FOUND PLANE
930
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4224240 A